# EUROPÄISCHE PATENTANMELDUNG

(11) **EP 1 184 944 A2**
(43) Veröffentlichungstag der Anmeldung: **06.03.2002**
(21) Anmeldenummer: 01120322.1
(22) Anmeldetag: 24.08.2001
(51) Int. Cl.: H01S 3/097

(54) **Excimer-Laser und Verfahren zum Betreiben eines Excimer-Lasers**

(30) Priorität: 29.08.2000 DE 10042292
(71) Anmelder: TuiLaser AG, 82110 Germering (DE)
(72) Erfinder: Strowitzki, Claus, 82205 Gilching (DE)
(74) Vertreter: Schurack, Eduard F.

(57) **Zusammenfassung**

Die vorliegende Erfindung betrifft einen Excimer-Laser mit einem Ladekreis umfassend eine Parallelschaltung eines Speicherkondensators (C_{B}) mit einer Serienschaltung aus einer Umschwinginduktivität (L_{B}), einer Ladeinduktivität (L_{L}) und einer Zündvorrichtung (Z) zum Zünden des Excimer-Lasers, wobei der Speicherkondensator (C_{B}) zwei Kontakte zum Anschließen einer Stromversorgung (U_{L}) aufweist, einem Peakingkondensator (C_{P}), der der Ladeinduktivität (L_{L}) parallelgeschaltet ist, einer Entladestrecke umfassend zwei sich gegenüberliegende Elektroden (E1, E2), die dem Peakingkondensator (C_{P}) parallelgeschaltet ist, und einer Ansteuervorrichtung zur Ansteuerung der Zündvorrichtung (Z), wobei die Zündvorrichtung (Z) als MOSFET-Array ausgebildet ist. Die Erfindung betrifft auch ein korrespondierendes Verfahren zum Betreiben eines derartigen Excimer-Lasers.

## Beschreibung

Die vorliegende Erfindung betrifft einen Excimer-Laser mit einem Ladekreis umfassend eine Parallelschaltung eines Speicherkondensators mit einer Serienschaltung aus einer Umschwinginduktivität, einer Ladeinduktivität und einer Zündvorrichtung zum Zünden des Excimer-Lasers, wobei der Speicherkondensator zumindest einen Anschluß zum Anschließen einer Stromversorgung aufweist, einem Peaking-Kondensator, der der Ladeinduktivität parallel geschaltet ist, einer Entladestrecke umfassend zwei sich gegenüberliegende Elektroden, die dem Peaking-Kondensator parallelgeschaltet ist, und einer Ansteuervorrichtung zur Ansteuerung der Zündvorrichtung. Sie betrifft überdies ein Verfahren zum Betreiben eines derartigen Excimer-Lasers, bei dem zunächst der Speicherkondensator aus der Stromversorgung geladen wird und anschließend die Zündvorrichtung derart angesteuert wird, daß diese in einen leitenden Zustand übergeht, um den Excimer-Laser zu zünden.

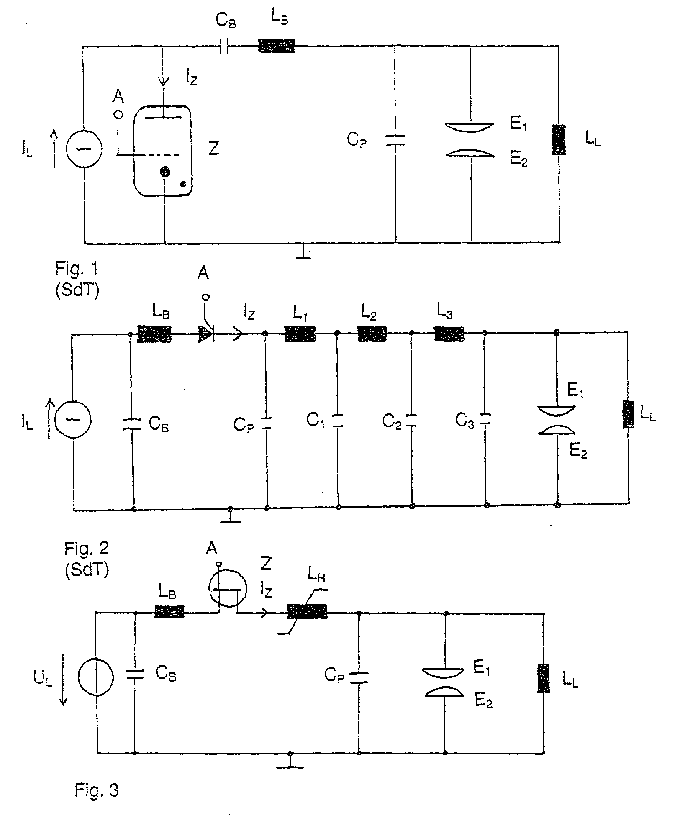

Ein derartiger Excimer-Laser sowie ein derartiges Verfahren zum Betreiben eines Excimer-Lasers sind aus dem Stand der Technik bekannt. Die zugehörigen Schaltbilder sind in schematischer Darstellung in Fig. 1 und Fig. 2 dargestellt.

Zunächst zu Fig. 1: Der Excimer-Laser, dessen Schaltbild in Fig. 1 dargestellt ist, umfaßt einen Speicherkondensator C_{B}, vorzugsweise realisiert als Kondensatorbank, die eine Vielzahl von Einzelkondensatoren umfasst, sowie in serieller Anordnung dazu eine Umschwinginduktivität L_{B}. Ein Ladekreis ergibt sich aus den beiden erwähnten Bauelementen C_{B} und L_{B} sowie einer dazu seriell angeordneten Ladeinduktivität L_{L}, wobei der Speicherkondensator C_{B} aus einer Stromquelle I_{L} geladen wird. Parallel zur Ladeinduktivität L_{L} ist ein Peaking-Kondensator C_{P} sowie eine angeordnet. Parallel zur Stromquelle I_{L} ist als Zündvorrichtung Z ein Thyratron mit einem Steuereingang A angeordnet. Im Betrieb des Excimer-Lasers gemäß Fig. 1 wird für einen einzelnen Pumpvorgang des Lasers zunächst der Speicherkondensator C_{B} aus der Stromquelle I_{L} aufgeladen, wobei der Ladestrom über den Speicherkondensator C_{B}, die Umschwinginduktivität L_{B}, sowie die Ladeinduktivität L_{L} fließt. Anschließend wird durch entsprechende Ansteuerung des Eingangs A des Thyratrons Z der Laser gezündet, wodurch die auf dem Speicherkondensator C_{B} gespeicherte Ladung zu einem hohen Grad in den Peaking-Kondensator C_{P} umgeladen wird. Dieses Umschwingen führt dazu, daß zwischen den beiden Elektroden E1 und E2 eine Spannung entsteht, die hoch genug ist, um den Pumpprozeß des Lasers auszulösen. Die Umschwinginduktivität L_{B} setzt sich zusammen aus parasitären Induktivitäten der Einzelkondensatoren des Speicherkondensators C_{B}, sowie einer optionalen, zusätzlichen diskreten Induktivität, die im Hinblick auf den sich aus dem Speicherkondensator C_{B}, dem Peakingkondensator C_{P}, der Umschwinginduktivität L_{B} ergebenden Schwingkreis so zu dimensionieren ist, daß das Umschwingen, d.h. die Aufladung des Peaking-Kondensators C_{P}, innerhalb von ca. 100 ns erfolgt. Ein langsameres Umschwingen würde zu einer Verringerung der Effizienz führen, ein schnelleres Umschwingen zu einer unnötig starken Beanspruchung der Bauteile infolge der dadurch höheren fließenden Ströme.

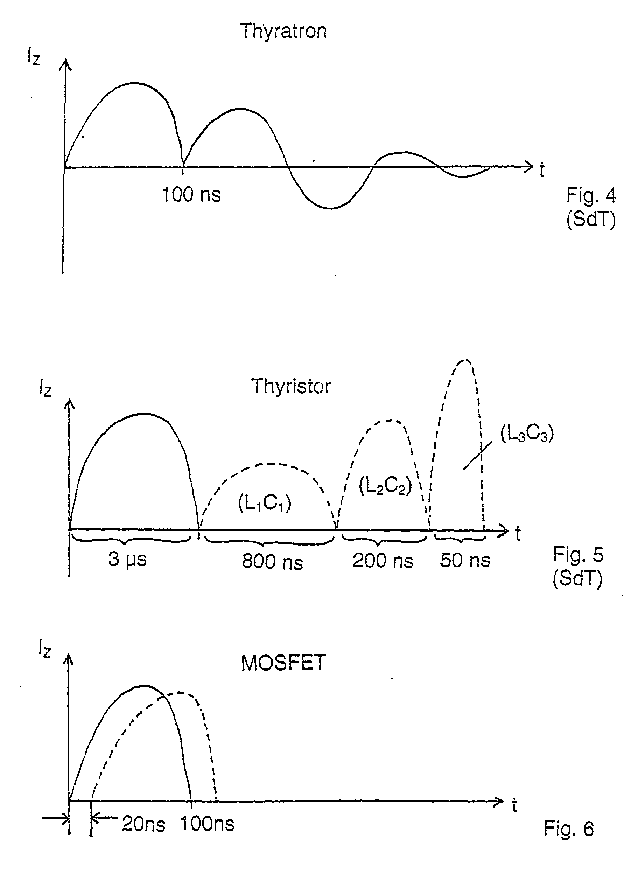

Technologisch bedingt läßt sich lediglich maximal 80 % der im Speicherkondensator C_{B} gespeicherten Ladung beim Zünden auf den Peaking-Kondensator C_{P} übertragen. Im Zusammenspiel mit dem Thyratron Z als Zündvorrichtung ergeben sich daraus folgende Nachteile: Zunächst ist darauf hinzuweisen, daß die Fallzeit, d.h. die Zeit bis ein Thyratron nach entsprechender Ansteuerung über den Eingang A vom nichtleitenden in den leitenden Zustand wechselt, ca. 10 ns beträgt. Naturgemäß kann jedoch ein Thyratron nicht definiert durch entsprechende Ansteuerung in einen nichtleitenden Zustand geschaltet werden. Vielmehr schwingt die im Speicherkondensator C_{B} gespeicherte Restenergie in die Zündvorrichtung zurück und erzeugt dort einen Strom I_{Z}, dessen zeitlicher Verlauf in Fig. 4 dargestellt ist. Dieser Strom schwingt als nutzlose Energie in den Laserkopf, d.h. fließt auf die Elektroden E1 bzw. E2, führt dort jedoch nicht mehr zu einer Laserstrahlung, da das Gas zu diesem Zeitpunkt bereits entartet ist. Vielmehr werden hierdurch Abbrand und Verschleiß an den Elektroden E1 und E2 verursacht, was zu einem häufigen Auswechseln der Elektroden - ungefähre Lebensdauer ca. eine Milliarde Pulsvorgänge - führt. Da nämlich die Bedingungen für eine Volumenentladung nicht mehr gegeben sind, verpufft die Energie in diskreten lokalisierten Funken. Aufgrund der einem Thyratron eigenen langen Rekombinationszeit lassen sich Repetitionsraten des Pulsvorgangs nur in einer Größenordnung von ca. 300 Hz erzielen. Weiterhin von Nachteil ist die hohe Standby-Verlustleistung eines Thyratrons, die bei typisch 200 W liegt.

Bei dem weiteren aus dem Stand der Technik bekannten Excimer-Laser, dessen Schaltbild schematisch in Fig. 2 dargestellt ist, sind die Bauelemente, die Bauelementen von Fig. 1 entsprechen, mit denselben Bezugszeichen gekennzeichnet und werden nicht nochmals beschrieben. Bei dem Excimer-Laser gemäß Fig. 2 ist der Speicherkondensator C_{B} parallel zu einer Stromquelle I_{L} angeordnet, an die sich seriell die Umschwinginduktivität L_{B} und die Zündvorrichtung Z anschließen. Parallel hierzu ist wieder ein Peaking-Kondensator C_{P} angeordnet. An den Peaking-Kondensator C_{P} schließen sich drei Pulskompressionsstufen, jeweils umfassend eine Induktivität (L1, L2, L3) und einen Kondensator (C1, C2, C3), an, auf die die Entladungsstrecke mit den Elektroden E1 und E2 und hierzu parallel angeordnet die Ladeinduktivität L_{L} folgen. Bei dem in Fig. 2 dargestellten Schaltbild ist die Zündvorrichtung durch einen Thyristor oder ein IGBT (Insulated Gate Bipolar Transistor) realisiert. Die Fallzeit eines Thyristors ist größer als 500 ns, die Öffnungszeit, d.h. die Zeit, die ein Thyristor braucht, um vom leitenden in den nichtleitenden Zustand überzugehen, beträgt mehr als 20 µs. Ein Umschwingvorgang beträgt daher typischerweise zwischen drei und zehn µs. Dieses Umschwingen wäre zu langsam, um einen Pumpvorgang auszulösen, da die Ladungsträger zwischenzeitlich in der Vorionisation des Lasers bereits wieder rekombinieren würden. Es ist daher bei Verwendung eines Thyristors oder IGBTs als Zündvorrichtung nötig, den Zündimpuls zu komprimieren, d.h. zeitlich zu stauchen. Mit Bezug auf Fig. 5, in der der zeitliche Verlauf des Stroms I_{Z} dargestellt ist (durchgezogene Linie), ist zu erkennen, daß pro Kompressionsstufe eine Kompression mit dem Faktor 4 realisierbar ist (gestrichelte Linien). Aufgrund der kürzeren Rekombinationszeit eines Thyristors oder IGBTs lassen sich Repetitionsraten des Pulsvorgangs bis zu 5 kHz realisieren. Allerdings bedeutet der Einbau von Pulskompressionsstufen einerseits einen erheblichen Aufwand. Andererseits stehen infolge der vielen Umladungen für den Pumpprozeß am Ende lediglich ca. 50 % der ursprünglich im Speicherkondensator C_{B} gespeicherten Energie für den Pumpprozeß zur Verfügung.

Beiden im Zusammenhang mit Fig. 1 und Fig. 2 beschriebenen Excimer Lasern liegt weiterhin der Nachteil zugrunde, daß der Kondensator C_{B} aus einer teuren Stromquelle geladen werden muß. Dies hat seine Ursache darin, daß der Speicherkondensator C_{B} nach einer Zündung und der sich anschließenden Rekombination der Zündvorrichtung im wesentlichen entladen ist und ein Verbinden des Speicherkondensators C_{B} mit einer Spannungsquelle, die preisgünstiger wäre, zu einer Zerstörung des Speicherkondensators C_{B} führen würde.

Die Aufgabe der vorliegenden Erfindung besteht deshalb darin, einen Excimer-Laser der eingangs genannten Art derart weiterzubilden bzw. das eingangs genannte Verfahren derart weiterzubilden, daß der Speicherkondensator über eine preisgünstige Spannungsquelle geladen werden kann.

Diese Aufgabe wird dadurch gelöst, daß bei dem gattungsgemäßen Excimer-Laser, die Zündvorrichtung als MOSFET-Array ausgebildet ist. Bei dem erfindungsgemäßen Verfahren wird die Aufgabe dadurch gelöst, daß die Zündvorrichtung in einem weiteren Schritt derart angesteuert wird, daß diese in einen nichtleitenden Zustand übergeht.

Der Erfindung liegt die Idee zugrunde, daß bei Verwendung eines MOSFET-Arrays die Zündvorrichtung aktiv wieder abgeschaltet werden kann, d.h. daß nicht wie im Stand der Technik gewartet werden muß, bis sämtliche, nicht bei der Entladung verbrauchten Ladungsträger rekombiniert haben, bis ein erneuter Lade- und Zündvorgang initiiert werden kann. Vielmehr kann bei Verwendung eines MOSFET-Arrays der Speicherkondensator C_{B} derart groß dimensioniert werden, daß die für eine Zündung benötigte Energie nur einem Bruchteil der im Speicherkondensator C_{B} gespeicherten Ladung entspricht. Bei einem MOSFET-Array als Zündvorrichtung kann diese durch entsprechende Ansteuerung aktiv in den nichtleitenden Zustand gebracht werden, wodurch sich ein weiteres Abfließen von Ladung aus dem Speicherkondensator C_{B} verhindern läßt. Da demnach nach dem Zünden eine deutliche Ladungsmenge im Speicherkondensator C_{B} enthalten ist, führt ein Nachladen des Speicherkondensators C_{B} durch eine Spannungsquelle nicht zu deren Zerstörung. In bevorzugten Ausführungsformen beträgt die Speicherkapazität des Speicherkondensators C_{B} mehr als das Fünffache, bevorzugt mehr als das Zehnfache der für einen Entladungsvorgang benötigten Entladungsmenge.

Aus der Verwendung eines MOSFET-Arrays ergeben sich eine Vielzahl weiterer Vorteile: Durch das definierte, d.h. gesteuerte Abschalten des MOSFET-Arrays, d.h. des Übergangs vom leitenden in den nichtleitenden Zustand, lassen sich sogenannte Nachströme wie im Zusammenhang mit Fig. 4 erwähnt, vermeiden. Abbrand und Verschleiß der Elektroden sind daher erheblich reduziert. Dies resultiert in einer erhöhten Lebensdauer eines erfindungsgemäßen Excimer-Lasers. Infolge der sehr kurzen Fallzeit und der sehr kurzen Öffnungszeit, die beide in einer Größenordnung von 20 ns liegen, lassen sich erheblich höhere Repetitionsraten erreichen als bei den aus dem Stand der Technik bekannten Excimer-Lasern. Dadurch, daß die nicht für die Laserentladung genutzte Energie reduziert wird, sowie durch Vermeidung einer Pulskompression, wird etwa 90 % der dem Speicherkondensator C_{B} entnommenen Energie für den Pumpprozeß genutzt. Ein weiterer bedeutender Vorteil ergibt sich wie folgt: Dadurch, daß ein MOSFET-Array das definierte Abschalten der Ladungsentnahme aus dem Speicherkondensator C_{B} ermöglicht, läßt sich eine Spannungsüberhöhung am Peaking-Kondensator C_{P} erzielen. Dies liegt daran, daß sich infolge des Ausschaltvorgangs Resonanzen durch Schwingungen ergeben, die dazu führen, daß sich insbesondere eine Spannungsverdopplung erzielen läßt, die von dem Peaking-Kondensator C_{P} sinnvoll genutzt wird. Infolge dieser Spannungsverdopplung läßt sich die Ausgangsspannung der Spannungsquelle, die zum Laden des Speicherkondensators C_{B} dient, auf die Hälfte reduzieren. Dies resultiert in einer weiteren erheblichen Kostenersparnis, nicht nur aufgrund der geringeren Anforderung an die Spannungsquelle, sondern auch aufgrund der geringeren Anforderung hinsichtlich der Spannungsfestigkeit an die Zündvorrichtung, d.h. das MOSFET-Array.

Bevorzugte MOSFET-Transistoren sind beispielsweise der Typ APT10050B2LC von Advanced Power Technology, der DE-375X2 102N20 von Direct Energy Incorporated sowie der IXFK24N100 von IXYS.

Um für einen Excimer-Laser 20 mJ KrF* eine Energie von 0,5 J in einer Zeit von 100 ns schalten zu können, war in einem bevorzugten Ausführungsbeispiel ein MOSFET-Array mit ca. 120 MOSFETs nötig. Die Spannungsquelle lieferte eine Spannung von 8 kV, die Kapazität der Peaking-Kondensatoren betrug 8 nF, die Spannungsfestigkeit zweimal 8 kV (= 16 kV). Der Speicherkondensator C_{B} hatte eine Kapazität von 32 nF, die Umschwinginduktivität betrug 130 nH, so daß sich ein Strom während des Umschwingvorgangs von 2 kA ergab.

Bei einer bevorzugten Ausführungsform ist seriell zur Zündvorrichtung eine Hilfsinduktivität geschaltet, die derart dimensioniert ist, daß nach dem Zünden des Excimer-Lasers eine Verzögerung eines Umschwingens von auf dem Speicherkondensator C_{B} gespeicherter Ladung auf den Peaking-Kondensator C_{P} um eine vorbestimmte Zeitdauer bewirkbar ist. Dies wird insbesondere dadurch erreicht, daß die Hilfsinduktivität einen Kern aufweist und derart dimensioniert ist, daß der Kern nach der vorbestimmten Zeitdauer nach dem Zünden des Excimer-Lasers in Sättigung geht und dadurch der Wert der Hilfsinduktivität zusammenbricht, d.h. vernachlässigbar klein wird. Infolgedessen fließt unmittelbar nach dem Zünden infolge der gemeinsamen Wirkung der Umschwinginduktivität und der Hilfsinduktivität zunächst ein kleiner Strom. Dieser wächst allmählich an, wobei nach Überschreiten eines bestimmten Werts der Kern der Hilfsinduktivität in die Sättigung geht und die Hilfsinduktivität damit deutlich kleiner wird als die Umschwinginduktivität. Erst dann wird das Fließen eines großen Umschwingstroms ermöglicht. Dadurch wird erreicht, daß zunächst ein sauberer Schaltvorgang der Zündvorrichtung stattfindet, d.h. ohne daß bereits bei teilweisem Öffnen des Schalters Strom fließt, und erst nach der Beendigung des Schaltvorgangs ein Stromfluß ermöglicht wird. Dies resultiert in einer Verzögerung des Stromanstiegs über der Zündvorrichtung und erleichtert dadurch den Übergang vom leitenden in den nichtleitenden Zustand. Hierdurch wird die Lebensdauer des MOSFET-Arrays erhöht und die Verlustleistung des gesamten Lasers reduziert. Die Vielzahl der MOSFET-Arrays ist bevorzugt auf einer ebenen Fläche angeordnet.

Bei einer bevorzugten Ausführungsform ist die Ansteuerschaltung zum Ansteuern der Zündvorrichtung ausgelegt, die Zündvorrichtung derart anzusteuern, daß diese zur Zündung des Excimer-Lasers in einen leitenden Zustand übergeht und weiterhin derart, daß diese in einen nichtleitenden Zustand übergeht und zwar zu dem Zeitpunkt, zu dem die Spannung über dem Peaking-Kondensator ihr Maximum erreicht. Durch diese Maßnahme brauchen keine speziellen Schaltungen vorgesehen werden, um ein Rückschwingen der Energie zu verhindern. Da an einem Kondensator Strom und Spannung um 90° phasenverschoben sind, ist das Spannungsmaximum mit einem Stromminimum korreliert. Die maximale Spannung am Peaking-Kondensator geht daher mit einem Stromminimum einher, wobei genau im Stromminimum kein Rückschwingen von Energie auftritt. Bevorzugt wird der erwähnte Zeitpunkt durch Messung ermittelt und ein Timer in der Ansteuerschaltung entsprechend eingestellt.

Weitere vorteilhafte Weiterbildungen der Erfindung sind in den Unteransprüchen definiert. Ein Ausführungsbeispiel wird im folgenden unter Hinweis auf die beigefügten Zeichnungen näher beschrieben. Es stellen dar:
- Fig. 1: einen aus dem Stand der Technik bekannten Excimer-Laser mit einem Thyratron als Zündvorrichtung;
- Fig. 2: einen aus dem Stand der Technik bekannten Excimer-Laser mit einem Thyristor als Zündvorrichtung;
- Fig. 3: einen erfindungsgemäßen Excimer-Laser mit einem MOSFET-Array als Zündvorrichtung;
- Fig. 4: den zeitlichen Verlauf des Stroms I_{Z} durch die Zündvorrichtung Z bei dem Excimer-Laser gemäß Fig. 1;
- Fig. 5: den zeitlichen Verlauf des Stroms I_{Z} durch die Zündvorrichtung Z bei dem Excimer-Laser gemäß Fig. 2; und
- Fig. 6: den zeitlichen Verlauf des Stroms I_{Z} durch die Zündvorrichtung Z bei dem erfindungsgemäßen Excimer-Laser gemäß Fig. 3.

In Fig. 3 ist in schematischer Darstellung das Schaltbild eines erfindungsgemäßen Excimer-Lasers dargestellt, wobei Bauteile, die denen der Excimer-Laser von Fig. 1 und Fig. 2 entsprechen, dieselben Bezugszeichen tragen und nicht nochmals erklärt werden.

Der Speicherkondensator C_{B} wird hier aus einer Spannungsquelle U_{L} geladen. Diese verfügt vorzugsweise über einen Softstart-Modus, in dem sie beim Einschalten des Excimer-Lasers, und damit bei völlig ungeladenem Speicherkondensator C_{B}, zunächst eine Strombegrenzung vorsieht, um den Speicherkondensator C_{B} auf die Spannung U_{L} aufzuladen. Nach dem Softstart wird die Strombegrenzung abgeschaltet und der Speicherkondensator über die Spannungsquelle U_{L} geladen. Eine derartige Spannungsquelle läßt sich im Vergleich zu Stromquellen sehr kostengünstig realisieren.

Seriell zur Umschwinginduktivität L_{B} ist ein MOSFET-Array als Zündvorrichtung Z des Excimer-Lasers angeordnet, die über einen Eingang A, an dem eine Ansteuervorrichtung (nicht dargestellt) anschließbar ist, vom nichtleitenden in den leitenden Zustand geschaltet werden kann und umgekehrt. An die Zündvorrichtung Z schließt sich seriell eine Hilfsinduktivität L_{H} an, die derart dimensioniert ist, daß nach dem Zünden des Excimer-Lasers eine Stromverzögerung von bevorzugt 20 ns bewirkbar ist. Dies wird bevorzugt dadurch realisiert, daß die Hilfsinduktivität L_{H} einen Kern aufweist, der so dimensioniert ist, daß er nach einer vorbestimmten Zeitdauer nach dem Zünden des Excimer-Lasers in Sättigung geht und dadurch der Wert der Hilfsinduktivität vernachlässigbar klein wird. Dadurch wird der große Stromfluß, der mit dem Umschwingen der Ladung vom Speicherkondensator C_{B} auf den Peaking-Kondensator C_{P} einhergeht, erst freigegeben, wenn die Schalter der Zündvorrichtung, d.h. die MOSFETs des MOSFET-Arrays, vollständig in den leitenden Zustand übergegangen sind. Nach der Hilfsinduktivität L_{H} folgt die Parallelschaltung des Peaking-Kondensators C_{P}, der Entladestrecke mit den Elektroden E1 und E2 sowie der Ladeinduktivität L_{L}.

Dadurch, daß das MOSFET-Array aus der Parallelschaltung einer Vielzahl von in Serie geschalteten Einzel-MOSFETs besteht, werden die Einzel-MOSFETs mit relativ geringer Spannung belastet, was mit einer großen Zuverlässigkeit und einer hohen Lebensdauer verbunden ist.

Fig. 6 zeigt in durchgezogener Linie den zeitlichen Verlauf des Stroms I_{Z} durch das MOSFET-Array ohne Hilfsinduktivität L_{H} sowie in gestrichelter Darstellung den um 20 ns verschobenen Verlauf bei Verwendung einer geeignet dimensionierten Hilfsinduktivität L_{H}. Aus Fig. 6 ergibt sich weiterhin, daß bei Verwendung eines MOSFET-Arrays kein nennenswerter Nachstrom auftritt.

Für die Ansteuerung des MOSFET-Arrays über den Eingang A ist eine hochspannungsfeste galvanische Trennung notwendig, da die MOSFETs zumindest kurzzeitig unter Hochspannung stehen. Andererseits ist darauf zu achten, daß die MOSFETs sehr eng gekoppelt sind, um das Steuersignal sehr schnell an die MOSFETs zu führen. Zu diesem Zweck können die Steuersignale über Lichtwellenleiter übertragen werden und bevorzugt mittels eines Pulstransformators direkt übertragen werden.

Ein derartiger Pulstransformator läßt sich für den vorliegenden Anwendungszweck aufgrund der geringen Pulsdauer sehr einfach realisieren. Insbesondere ist nur eine Windung auf der Primär- und der Sekundärseite nötig. Als Kern kann beispielsweise ein 30 mm großer Ringkern verwendet werden. Die Isolation kann über ein Hochspannungskabel als Primärwindung sichergestellt werden. Bevorzugt werden die Primärseiten der Transformatoren in Reihe geschaltet. Dies gibt zum einen einen sehr einfachen Aufbau, zum anderen werden über die internen Kapazitäten in den MOSFETs die einzelnen MOSFETs beim Einschalten synchronisiert.

## Patentansprüche

1. Excimer-Laser mit
einem Ladekreis umfassend eine Parallelschaltung eines Speicherkondensators (C_{B}) mit einer Serienschaltung aus einer Umschwinginduktivität (L_{B}), einer Ladeinduktivität (L_{L}) und einer Zündvorrichtung (Z) zum Zünden des Excimer-Lasers, wobei der Speicherkondensator (C_{B}) zumindest einen Anschluß zum Anschließen einer Stromversorgung (U_{L}) aufweist,
einem Peakingkondensator (C_{P}), der der Ladeinduktivität (L_{L}) parallelgeschaltet ist, einer Entladestrecke umfassend zwei sich gegenüberliegende Elektroden (E1, E2), die dem Peakingkondensator (C_{P}) parallelgeschaltet ist, und
einer Ansteuervorrichtung zur Ansteuerung der Zündvorrichtung (Z),
**dadurch gekennzeichnet,**
**daß** die Zündvorrichtung (Z) als MOSFET-Array ausgebildet ist

2. Excimer-Laser nach Anspruch 1,
**dadurch gekennzeichnet,**
**daß** der Speicherkondensator (C_{B}) und/oder der Peakingkondensator (C_{P}) von einer Vielzahl von Kondensatoren gebildet sind/ist.

3. Excimer-Laser nach Anspruch 1 oder 2,
**dadurch gekennzeichnet,**
**daß** seriell zur Zündvorrichtung (Z) eine Hilfsinduktivität (L_{H}) geschaltet ist, wobei die Hilfsinduktivität (L_{H}) derart dimensioniert ist, daß nach dem Zünden des Excimer-Lasers eine Verzögerung eines Umschwingens von auf dem Speicherkondensator (C_{B}) gespeicherter Ladung auf den Peakingkondensator (C_{P}) um eine vorbestimmte Zeitdauer bewirkbar ist.

4. Excimer-Laser nach Anspruch 3,
**dadurch gekennzeichnet,**
**daß** die Hilfsinduktivität (L_{H}) einen Kern aufweist und derart dimensioniert ist, daß der Kern nach der vorbestimmten Zeitdauer nach dem Zünden des Excimer-Lasers in Sättigung geht und dadurch der Wert der Hilfsinduktivität (L_{H}) vernachlässigbar klein wird.

5. Excimer-Laser nach einem der vorhergehenden Ansprüche,
**dadurch gekennzeichnet,**
**daß** die Vielzahl der MOSFETs des MOSFET-Arrays auf einer ebenen Fläche angeordnet sind.

6. Excimer-Laser nach einem der vorhergehenden Ansprüche,
**dadurch gekennzeichnet,**
**daß** mit dem Speicherkondensator (C_{B}) mehr Ladung, insbesondere ein Vielfaches davon, speicherbar ist wie für die Beladung des Peakingkondensators (C_{P}) für einen Zündvorgang benötigt wird.

7. Excimer-Laser nach Anspruch 6,
**dadurch gekennzeichnet,**
**daß** er weiterhin eine Stromversorgung (U_{L}) umfaßt, die an dem Speicherkondensator (C_{B}) angeschlossen ist, wobei die Stromversorgung (U_{L}) als Spannungsquelle realisiert ist.

8. Excimer-Laser nach einem der vorhergehenden Ansprüche,
**dadurch gekennzeichnet,**
**daß** das Verhältnis aus dem Speicherkondensator (C_{B}) und dem Peakingkondensator (C_{P}) so gewählt ist, daß dadurch die Spannung, die nach dem Umschwingen am Peakingkondensator (C_{P}) anliegt, größer ist als die Spannung, die vor dem Umschwingen am Speicherkondensator (C_{B}) angelegen hat, insbesondere das Doppelte davon beträgt.

9. Excimer-Laser nach einem der vorhergehenen Ansprüche,
**dadurch gekennzeichnet,**
**daß** die Ansteuerschaltung zum Ansteuern der Zündvorrichtung (Z) ausgelegt ist,
die Zündvorrichtung (Z) anzusteuern, daß diese zur Zündung des Excimer-Lasers in einen leitenden Zustand übergeht, und
die Zündvorrichtung (Z) anzusteuern, daß diese in einen nichtleitenden Zustand übergeht und zwar zu dem Zeitpunkt, zu dem die Spannung über dem Peakingkondensator (C_{P}) ihr Maximum erreicht.

10. Verfahren zum Betreiben eines Excimer-Lasers mit einer Stromversorgung (U_{L}), einem Ladekreis umfassend eine Parallelschaltung eines Speicherkondensators (C_{B}) mit einer Serienschaltung aus einer Umschwinginduktivität (L_{B}), einer Ladeinduktivität (L_{L}) und einer Zündvorrichtung (Z) zum Zünden des Excimer-Lasers, wobei die Stromversorgung an den beiden Kontakten des Speicherkondensators (C_{B}) angeschlossen ist, einem Peakingkondensator (C_{P}), der der Ladeinduktivität (L_{L}) parallelgeschaltet ist, einer Entladestrecke umfassend zwei sich gegenüberliegende Elektroden (E1, E2), die dem Peakingkondensator (C_{P}) parallelgeschaltet ist, und einer Ansteuervorrichtung zur Ansteuerung der Zündvorrichtung (Z), folgende Schritte umfassend:
a) Laden des Speicherkondensators (C_{B}) aus der Stromversorgung (U_{L});
b) Ansteuern der Zündvorrichtung (Z) derart, daß diese in einen leitenden Zustand übergeht, um den Excimer-Laser zu zünden; **gekennzeichnet durch** folgenden weiteren Schritt:
c) Ansteuern der Zündvorrichtung (Z) derart, daß diese in einen nichtleitenden Zustand übergeht.

11. Verfahren nach Anspruch 10,
**dadurch gekennzeichnet,**
**daß** Schritt c) ausgeführt wird, bevor der Speicherkondensator (C_{B}) entladen ist.

12. Verfahren nach Anspruch 10 oder 11,
**dadurch gekennzeichnet,**
**daß** der Speicherkondensator (C_{B}) kontinuierlich aus der Stromversorgung (U_{L}), die durch eine Spannungsquelle realisiert ist, nachgeladen wird.

13. Verfahren nach einem der Ansprüche 10 bis 12,
**dadurch gekennzeichnet,**
**daß** Schritt c) zu einem Zeitpunkt durchgeführt wird, zu dem die Spannung über dem Peakingkondensator (C_{P}) ihr Maximum erreicht.

14. Verfahren nach einem der Ansprüche 10 bis 13,
**dadurch gekennzeichnet,**
**daß** als Zündvorrichtung (Z) ein MOSFET-Array verwendet wird.

15. Verfahren nach einem der Ansprüche 10 bis 14,
**dadurch gekennzeichnet,**
**daß** als Stromversorgung (U_{L}) eine Spannungsquelle verwendet wird.
